(19) Europäisches Patentamt
European Patent Office
Office européen des brevets

(11) **EP 3 021 282 A1**

(12) **EUROPEAN PATENT APPLICATION**

(43) Date of publication:
18.05.2016 Bulletin 2016/20

(51) Int Cl.:
***G06T 11/00*** *(2006.01)*

(21) Application number: 14306813.8

(22) Date of filing: 14.11.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Thomson Licensing
92130 Issy-les-Moulineaux (FR)

(72) Inventors:
• **Hellier, Pierre**
 **35576 Cesson-Sévigné (FR)**

• **Sabater, Neus**
 **35576 Cesson-Sévigné (FR)**
• **Perez, Patrick**
 **35576 Cesson-Sévigné (FR)**

(74) Representative: **Huchet, Anne**
 **Technicolor**
 **European Patent Operation**
 **1-5, rue Jeanne d'Arc**
 **92443 Issy-les-Moulineaux cedex (FR)**

(54) **Methods and apparatus for learning palette dictionaries for device-ready example-guided recolorization**

(57) A particular implementation determines color palettes of images by extracting and decomposing color palettes based on the image color content. The decomposition can produce a dictionary matrix, an activation matrix, or both. The dictionary matrix can be used in recoloring an image, either directly or after storing. Another implementation selects a color palette to recolor an image by accessing metadata associated with the image and estimating a scene type based on the metadata and/or other information. Color palettes are retrieved from memory corresponding to the scene type of the image and are used for recoloring the image. Instructions for the implementation can be stored on a non-transitory computer readable medium such that the embodiments can be implemented by one or more processors.

*FIG. 10*

**Description**

TECHNICAL FIELD

The present principles relate generally to methods and apparatus for learning color palette dictionaries for example-guided image recolorization.

BACKGROUND

Color transfer is the process to modify the color of an input image according to the color palette of an example image. The color changes could be more or less realistic or artistic depending on the choice of the example image and the final sought appearance. Editing tools for large personal photo collections could be improved with example-based algorithms, especially considering the trend of editing sets of multicontributor images of a given event, such as a party or a wedding. These types of images are often taken with smartphones. Despite the increasingly high quality of such pictures in terms of resolution and imaging devices, these pictures do not reach the high degree of colorfulness of higher end devices.

SUMMARY

These and other drawbacks and disadvantages of the prior art are addressed by various described embodiments, which are directed to methods and apparatus for learning palette dictionaries for device-ready example-guided recolorization.

According to one general aspect, a method for determining color palettes of at least one image comprises extracting a color palette comprising a color dictionary for at least one image based on color content in the image. The color palette can be decomposed into a dictionary matrix, an activation matrix, or both. The dictionary matrix is stored for use in recolorization.

According to another general aspect, an apparatus for determining color palettes of at least one image comprises a processor, configured to extract a color palette comprising a color dictionary for at least one image based on color content in the image. The processor is configured to also decompose the color palette into a dictionary matrix, an activation matrix, or both. Recoloring circuitry uses the dictionary matrix for use in recoloring an image.

According to another general aspect, a method for selecting a color palette to recolor an image accesses metadata associated with the image and estimates a scene type of the image using at least one of the metadata and other information. At least one color palette is retrieved corresponding to the scene type. The color palette is used to recolor the image.

According to another general aspect, an apparatus for selecting a color palette to recolor an image comprises means for extracting a color palette comprising a color dictionary. Decomposition means generates a dictionary matrix, an activation matrix, or both. Recoloring circuitry recolors a second image using the dictionary matrix based on a scene type of the second image and the available dictionary matrices.

The details of one or more implementations are set forth in the accompanying drawings and the description below. Even if described in one particular manner, it should be clear that implementations may be configured or embodied in various manners. For example, an implementation may be performed as a method, or embodied as an apparatus, such as, for example, an apparatus configured to perform a set of operations or an apparatus storing instructions for performing a set of operations, or embodied in a signal. Other aspects and features will become apparent from the following detailed description considered in conjunction with the accompanying drawings and the claims.

BRIEF DESCRIPTION OF THE DRAWINGS

The present principles may be better understood in accordance with the following exemplary figures, in which:

Figure 1 shows the various segments of the colorization process.
Figure 2 shows an example of extraction and decomposition for a set of images, resulting in a dictionary of five dictionary palettes.
Figure 3 shows a cluster of images of the database corresponding to the first mode.
Figure 4 shows a cluster of images corresponding to the second mode.
Figure 5 shows a cluster of images corresponding to the third mode.
Figure 6 shows a cluster of images corresponding to the fourth mode.
Figure 7 shows a cluster of images corresponding to the fifth mode.
Figure 8 shows an embodiment of a method for determining color palettes of at least one image.
Figure 9 shows an embodiment of an apparatus for determining color palettes of at least one image.
Figure 10 shows an embodiment of a method for selecting a color palette to recolor an image.
Figure 11 shows an embodiment of an apparatus for selecting a color palette to recolor an image.
Figure 12 shows an embodiment of an apparatus for determining color palettes for recoloring an image.

DETAILED DESCRIPTION

The described embodiments are directed to methods and apparatus for learning palette dictionaries for device-ready example-guided recolorization. Such recolorization can be used in smartphones so users can edit an image before sharing on a social media outlet.

There are several prior methods for image recolorization.

A first prior art approach uses standard, predefined filters. These predefined color filters are well adapted for smartphones since they are light in terms of memory and computation complexity. However, they suffer from a number of weaknesses. First, they lead to very common looking colors. Second, they only define a global color transformation so the editing capability is limited. This is problematic, for example, if one wants to edit a specific color corresponding to one object.

A second prior art approach uses a dedicated image editing tool, such as Photoshop. These tools enable a practically unlimited array of editing tools. However, they are not adapted for rapid editing and sharing on a smartphone.

A general aspect of the embodiments described herein uses example-guided techniques that benefit from a given example image whose colors are aesthetically desirable. The corresponding palette of the example image is copied to the image to be edited. This approach has many advantages, since one palette, applied to different images will lead to different results, enabling a much larger diversity of looks than predefined color look up tables. In addition, although more computationally demanding than a look up table, such an approach is compatible with embarked processing. However, an example-guided processing system needs an example image as an input. The example image can be provided or manually chosen by the user, which can be a limitation.

One embodiment of such a system learns a set of palettes that can be used for example-guided image editing from a set of desirable example images of a known scene. The example palettes can be used for editing on a device, such as a smartphone, by proposing example palettes possibly corresponding to the current image to be edited. The example scene can be matched to the current picture using metadata, such as GPS (Geostationary Positioning Satellite) information, time of day, and weather, for example. Other information can include the type of scene, such as a sunset, a beach landscape, or a mountain view, or the season, weather, event, or web pictures.

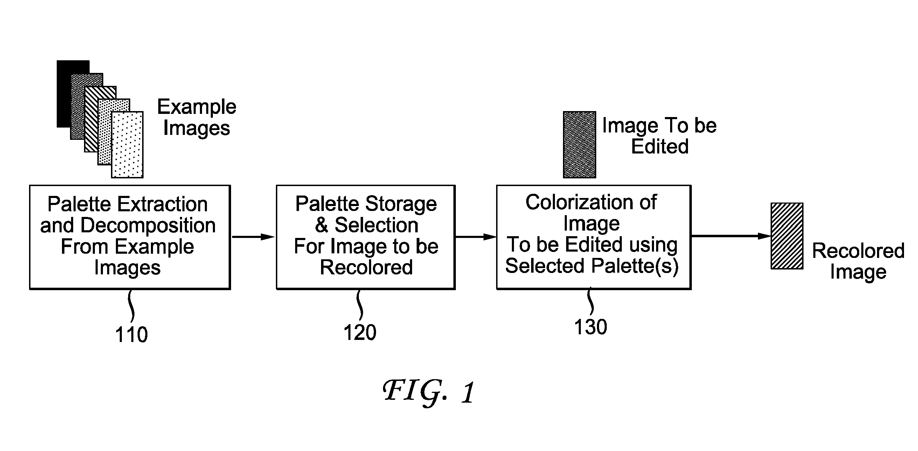

Figure 1 shows the various segments of the colorization process. Block 110 represents extraction of palettes from example images. This, for example, can be extracting the palettes of a sunset scene, a beach scene, and a mountain scene. Block 120 represents palette storage and selection from the stored palettes for use in recoloring an image. Block 130 represents colorization of an image using the selected palettes, the details of which are the subject of other applications by the inventors.

As mentioned, block 110 of Figure 1 represents palette extraction from a set of aesthetic images of a given scene. The classification of scenes is assumed to be known, for example, indoor/outdoor, mountain/urban/rural/beach, sunrise/midday/cloudy/sunset. For each scene, a set of aesthetic images is retrieved. Alternatively, a user may want to compute their own set of example palettes. This could arise in several ways. For example, a user can retrieve images that are aesthetically desirable from a database such as flickr. Or, a user may have a personal set of images, for example, from a vacation and use the best images from this set to compute example palettes and estimate the dictionary for recoloring the pictures of that vacation.

In either case, for a given scene and for a set of m images, a color palette corresponding to each image is extracted by using an extraction algorithm. Every palette is expressed in terms of a known color dictionary of length n. The NBS-ISCC dictionary is one such color dictionary and has 267 entries. The vector obtained from extraction is a vector of proportions that sum to 1. In other words, the $p^{th}$ entry of the vector provides the proportion of the $p^{th}$ color dictionary in the input image. For the NBS-ISCC dictionary, entry 33 of the 267 entries is "brownish pink" and so the $33^{rd}$ entry in the palette vector of an image describes the proportion of "brownish pink" in that image.

A Non Negative Matrix Factorization (NMF) can be used to extract the dictionary palettes. Other methods can also be used, but the NMF reduces the *nxm* matrix of palettes to a product of two matrices of positive coefficients:

$$n \begin{pmatrix} \cdot & \cdots & \cdot \\ \vdots & \ddots & \vdots \\ \cdot & \cdots & \cdot \end{pmatrix}^{m} = W_{[n*k]} * H_{[k*m]}$$

The matrix *W* of size *nxk* is the dictionary matrix, while matrix H is known as the activation matrix and *k* is the rank of the decomposition, where $k<<\min(n,m)$. This can also be seen as a low-rank approximation of the input palette matrix. This low-rank approximation is valid since we assume that, for a set of images of a given scene, the space is not densely populated. In other words, the rank of the input matrix is not *nxm*.

Another interpretation can be made of the NMF on color palettes. Actually, each column vector of the input matrix (corresponding to a palette vector of an example image) decomposes as a linear combination of example palettes, weighted by the coefficients of the activation matrix. A sub-product of such decomposition is clustering since activation weights can assign each image to a given cluster. Other types of clustering methods can be used that use the coefficients of the activation matrix.

The extraction of palettes from an image or set of images is completely independent from the process of performing Non Negative Matrix Factorization. The extracted palette serves as a color description of each image or set of images. Other method of extracting a color palette can be used, for example, projecting each pixel of the image into a color dictionary, such as the ISCC-NBS System of Color Designation comprising 267 colors.

Each image palette, for example, can be represented as a vector of D entries, each entry being the proportion of a dictionary color in the image, where there are D colors in the dictionary. The NMF guarantees that the coefficients of the decomposition are positive. The activation matrix can be used as input to a clustering method to group images according to their colors. The dictionary matrix can be used to derive palettes used for design and editing.

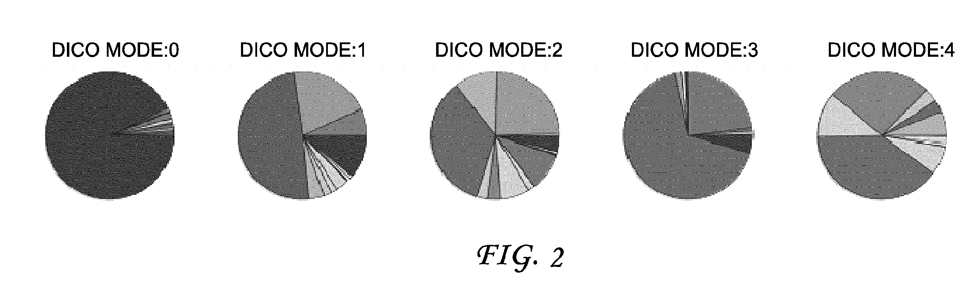

The Non Negative Matrix Factorization leads to a sparse, compact and descriptive decomposition. Figure 2 shows an example of extraction of palettes and decomposition for a set of 105 sunset images, resulting in a dictionary of five dictionary palettes for the database of 105 images. The dictionary palettes convey different atmospheres and renderings from yellow shiny sunset to dark reddish sunset, for example. The dictionary palettes are represented as pie charts, the area of each pie slice corresponding to the proportion of that color in the dictionary palette. For the sake of representation, only a small dictionary of length 30 was used, meaning up to 30 colors can be used to make up each dictionary palette. For a practical application, a 267-long dictionary can be used, for example. A palette for an individual image is a linear combination of, for this example, the five dictionary palettes that have been extracted and decomposed from the set of 105 sunset images.

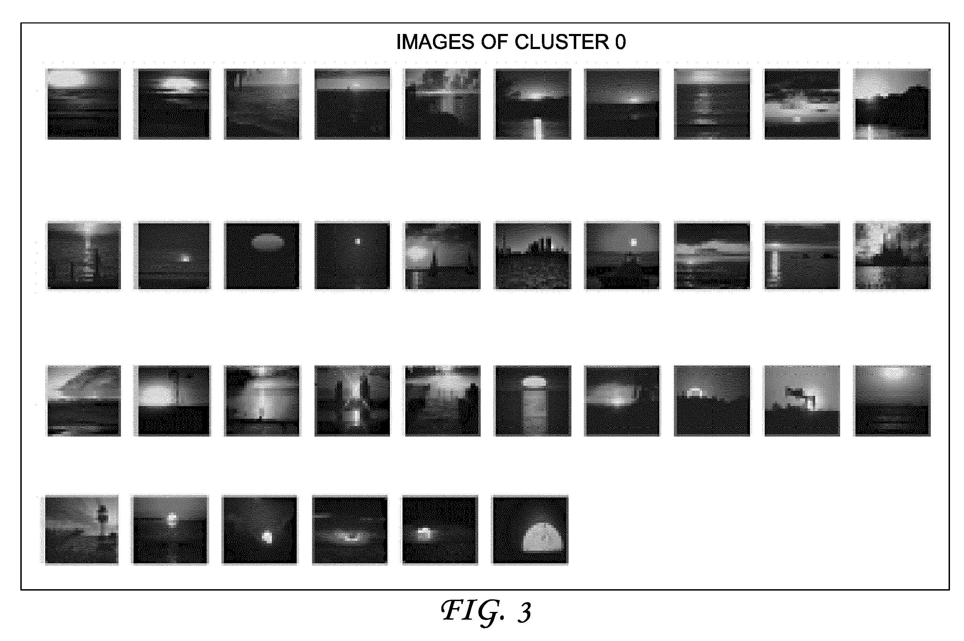

Figure 3 shows a cluster of images of the database corresponding to the first mode. This means that these images from the set of 105 sunset images have the highest activation coefficient corresponding to the first mode, which is the first of the five entries in the dictionary of Figure 2. This group is also known as Cluster 0.

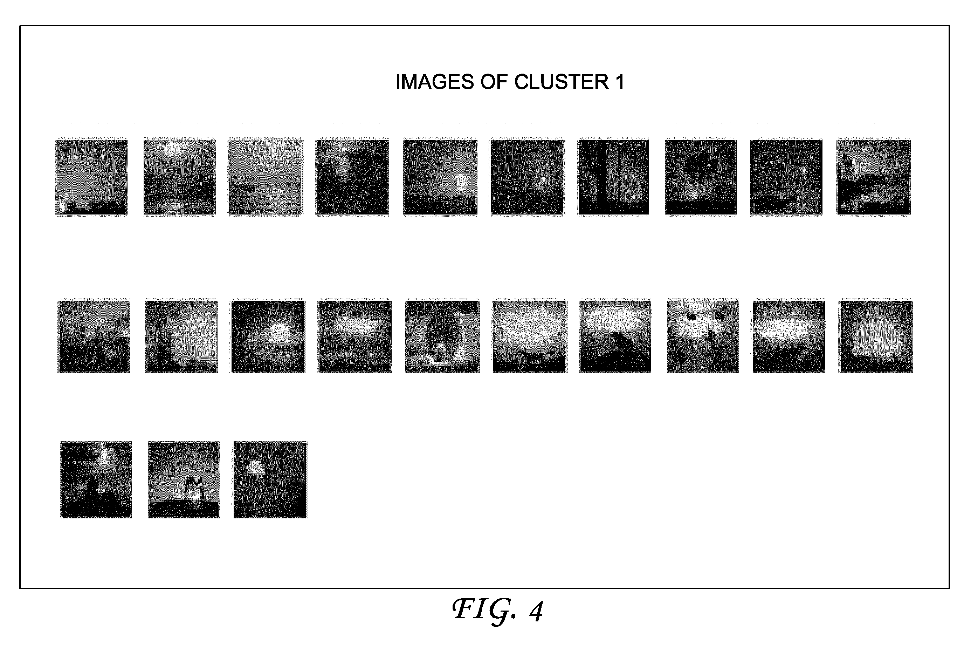

Figure 4 shows a cluster of images of the database having the highest activation coefficient corresponding to the second mode, also known as Cluster 1.

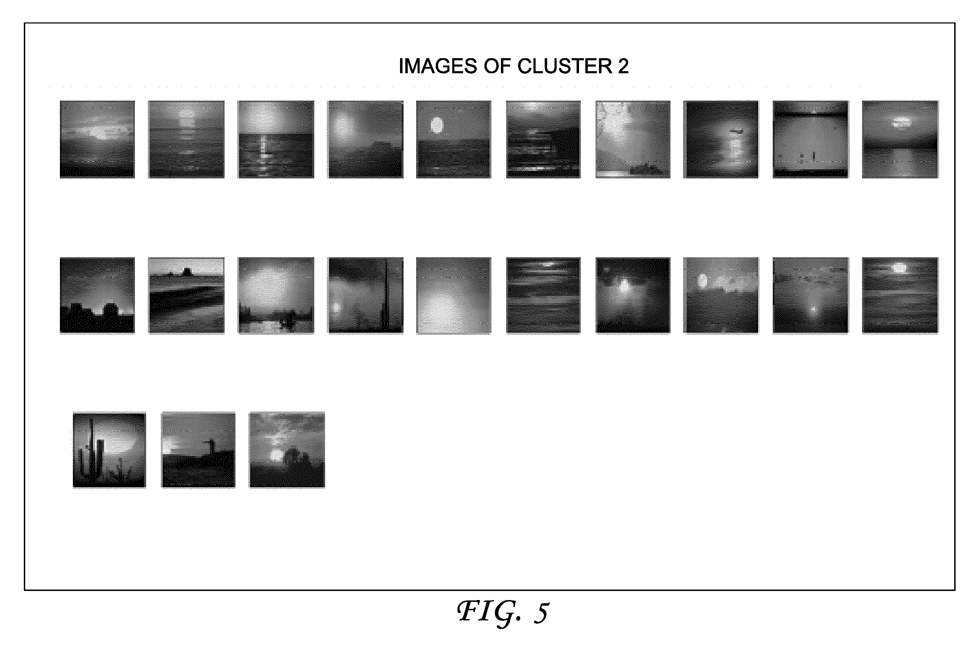

Figure 5 shows a cluster of images of the database having the highest activation coefficient corresponding to the third mode, also known as Cluster 2.

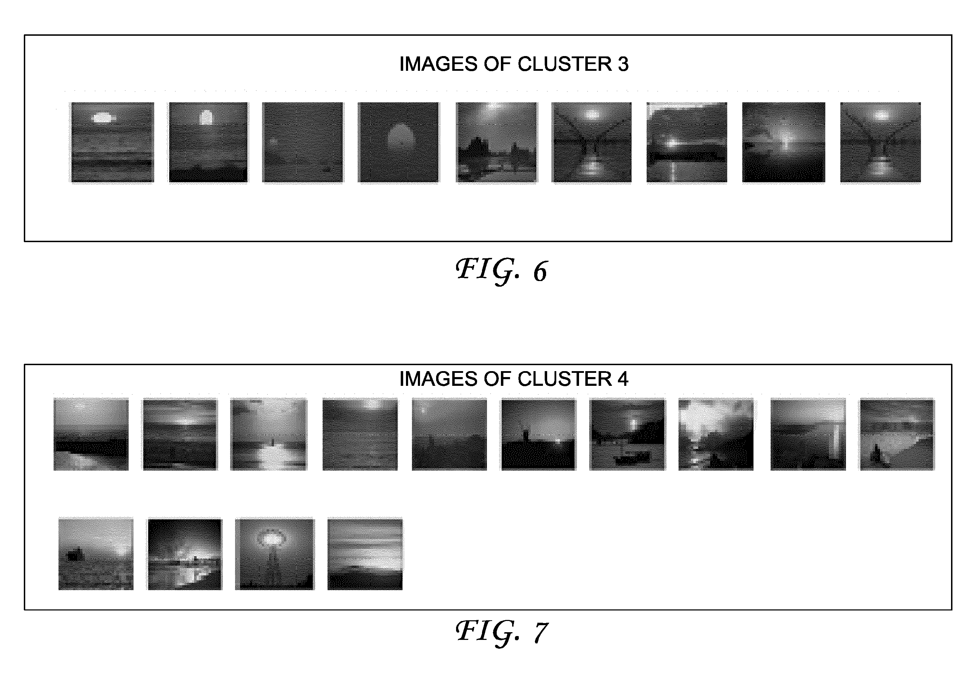

Figure 6 shows a cluster of images of the database having the highest activation coefficient corresponding to the fourth mode, also known as Cluster 3.

Figure 7 shows a cluster of images of the database having the highest activation coefficient corresponding to the fifth mode, also known as Cluster 4.

Figures 3 through 7 contain 36, 23, 23, 9, and 14 images, respectively, totaling the 105 images in the set of sunset images. The five modes are those corresponding to the dictionary of palettes in Figure 2. Each of those palettes was generated by extraction and decomposition of the complete set of 105 images, and each of those palettes is composed of the set of 30 colors in the initial color dictionary. Each individual image in the 105 set of sunset images can be represented by a linear combination of the five extracted and decomposed palettes of the dictionary in Figure 2.

Other methods to find color palettes can be used, such as projecting each pixel into a given color dictionary and using other types of clustering, such as k-means, for example. The method is completely independent on the chosen color dictionary, as well as the clustering method.

Once the lightweight dictionary palettes have been extracted offline, they can easily be embarked on a device such as a smartphone. These dictionary palettes are referred to as lightweight because they have a very low memory footprint.

An example editing scenario can be described by a series of steps. First, a user can take a picture using his smartphone camera. Some metadata can be collected during this acquisition, such as acquisition time, date and location, using a GPS, for example. Additional information can also be retrieved, including online information from a web server, such as the current weather. This additional information can be used to estimate the type of scene being shot. The picture can be processed immediately for recolorization, or stored and available at some other point in time for recolorization. In either case, this picture is referred to as the captured image.

A processor is used to classify the type of scene in the captured image by using some combination of metadata and the additional information. Next, corresponding color palette(s) are retrieved from memory on the smartphone to be used as example palettes. These example palettes that are retrieved can be based on the classification of the picture that was shot, such as the one coming closest to the captured image palette (assuming that the processor has also extracted the captured image's palette). The captured image is enhanced using the selected palette(s) and can then be shared on social networks from the smartphone.

Alternatively, instead of retrieving an example palette that is closest to the captured image's palette, a user can choose the example palettes that give a most desired effect to the captured image, either selected before recolorization of the captured image, or afterward. Recolorization can be performed using the palette chosen in this way.

Allowing an image to be classified by scene type, and either enabling a user to select a sample palette with a desired color effect, or automatically selecting an example palette closest to the image to be recolored, provides significant improvements over prior methods.

This process has particular advantages in that decomposition of example palettes can be done offline and stored on a smartphone using a small amount of memory. Recolorization can be processed online interactively using the stored example palettes. This method also offers a variety of editing capabilities compared to predefined filters, and can be made fully automatic by a user.

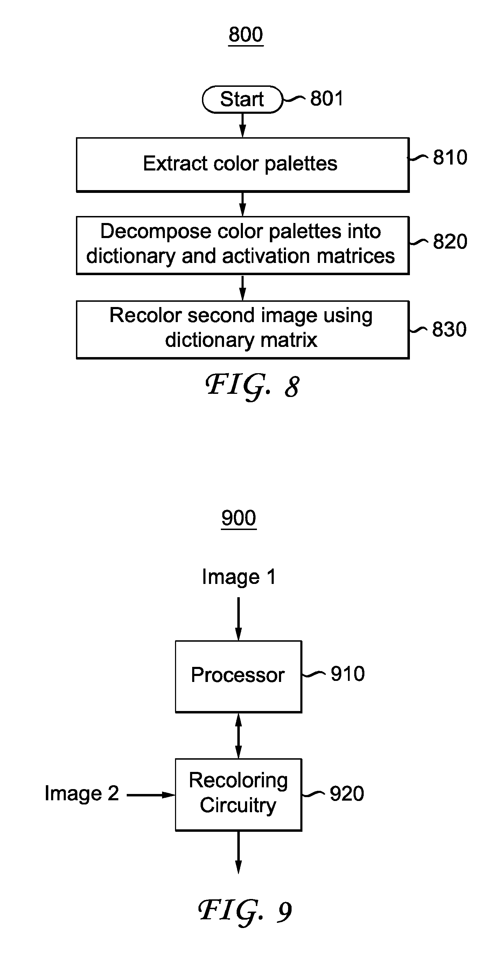

Figure 8 shows one exemplary embodiment of a method 800 for determining color palettes of at least one image. The method begins at a start block 801 and proceeds to block 810 for extracting a color palette comprising a color dictionary for at least one image based on color content in the at least one image. The method proceeds to block 820 for decomposing the color palette into a dictionary matrix and an activation matrix. The method then proceeds to block 830 for recoloring a second image.

Figure 9 shows an exemplary embodiment of an apparatus 900 for determining color palettes of at least one image. The apparatus comprises a processor 910 which is configured to extract a color palette comprising a color dictionary for at least one image based on color content in the at least one image. Processor 910 is also configured to decompose the color palette into a dictionary matrix, an activation matrix, or both. Processor 910 is in signal communication with recoloring circuit 920 to recolor a second image using the dictionary matrix to generate a recolored image.

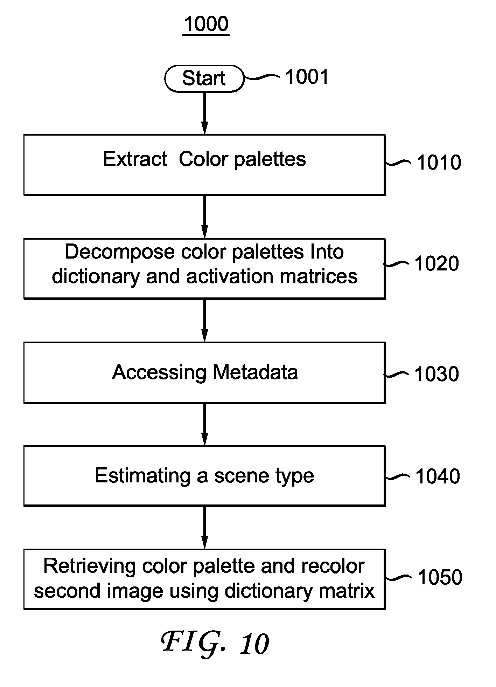

Figure 10 shows an exemplary embodiment of a method 1000 for selecting a color palette to recolor an image. The method starts at start block 1001 and proceeds to block 1010 for extracting color palettes. The extraction can be made on, but not limited to, stored images, which are not shown. The method then proceeds to block 1020 for decomposing the color palette into a dictionary matrix, an activation matrix, or both. At some point in time, when a second image is captured or accessed, control proceeds to step 1030 for accessing metadata and possibly other information to be used with the image to be recolored. The method then proceeds to block 1040 for estimating a scene type of the image using at least one of the metadata and other information. Control then proceeds to step 1050 for retrieving at least one color palette, from either an internal or external memory, or from a dictionary matrix recently computed, corresponding to the scene type to be used in recoloring the image. Recolorization of a second image follows step 1050, but is not shown.

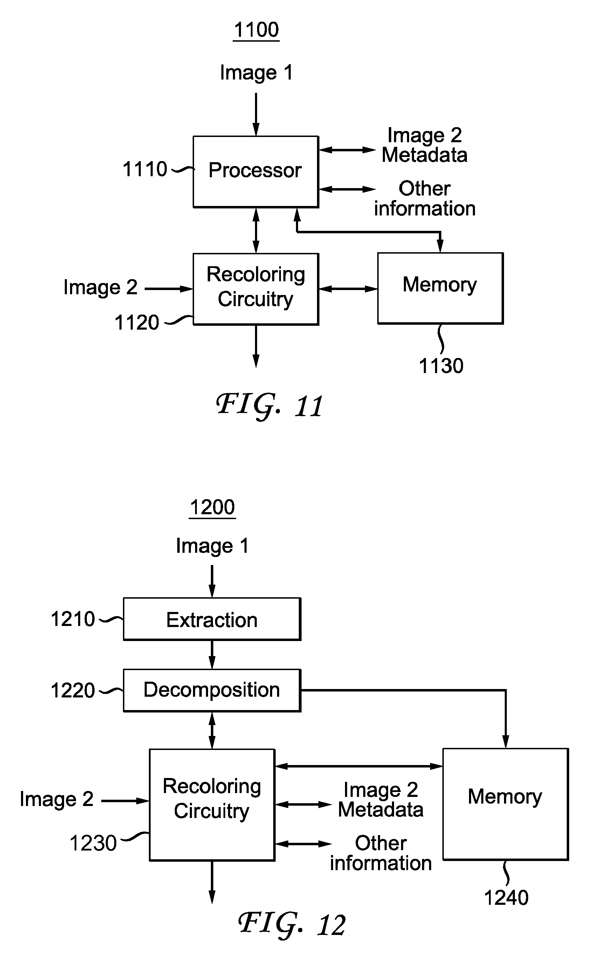

Figure 11 shows an exemplary embodiment of an apparatus 1100 for selecting a color palette to recolor an image. The apparatus comprises a processor 1110 that is configured to access metadata associated with the image and estimate a scene type of the image using at least one of the metadata and other information to be used with the image to be recolored. Processor 1110 takes a first image as input on a first input and also is in signal communication with a source of metadata on a second input and a source of other information to be accessed on its third input. Processor 1110 can also access memory 1130 on another port. Processor 1110 is in signal communication with recoloring circuitry 1120 that retrieves at least one color palette from memory 1130, in signal communication with recoloring circuitry 1120, corresponding to the scene type to be used in recoloring a second image, input to one of the input ports of recoloring circuitry 1120.

Figure 12 shows another embodiment of an apparatus 1200 for determining color palettes of at least one image. The apparatus comprises extraction means 1210 for extracting a color palette corresponding to a color dictionary from a first image. The extraction means output is in signal communication with the input of decomposition means 1220. Decomposition means output is sent to recoloring circuitry 1230 input and/or memory means 1240. Recoloring circuitry 1230 also takes as an input a second image to be recolored on a second input port, and can access memory means 1240. Recoloring circuitry 1230 also accesses metadata on a third port and other information on either the third or a fourth port. Recoloring circuitry 1230 can output the recolored second image on a first output port, or store it in memory 1240. Memory 1240 can be internal or external memory, and can be part of apparatus 1200 or separate from apparatus 1200.

The present description illustrates the present principles. It will thus be appreciated that those skilled in the art will be able to devise various arrangements that, although not explicitly described or shown herein, embody the present principles and are thereby included within the present principles.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

These and other features and advantages of the present principles may be readily ascertained by one of ordinary skill in the pertinent art based on the teachings herein. It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles are not limited to those precise embodiments, and that various changes and modifications may be effected therein by one of ordinary skill in the pertinent art without departing from the scope of the present principles. All such changes and modifications are intended to be included within the scope of the present principles as set forth in the appended claims.

**Claims**

1. A method, comprising:

    extracting a color palette comprising a color dictionary for the at least one image based on color content in the at least one image;
    decomposing said color palette into a dictionary matrix; and
    recoloring a second image using said stored dictionary matrix based on a scene type of said second image corresponding to said color palette.

2. The method of Claim 1, comprising further decomposing said color palette into an activation matrix.

3. The method of Claim 1, comprising storing said dictionary matrix prior to the recoloring.

**4.** The method of Claim 1, wherein the extracting of the color palette comprises projecting each pixel of the at least one image into a color dictionary.

**5.** The method of Claim 4, wherein the color dictionary is the ISCC-NBS System of Color Designation.

**6.** The method of Claim 1, wherein the decomposing comprises performing non-negative matrix factorization on a set of color palettes.

**7.** The method of Claim 2, comprising using the activation matrix as input to a clustering of group images according to their colors.

**8.** The method of Claim 1, wherein recoloring the second image further comprises:

accessing metadata associated with the second image;
estimating a scene type of the second image using at least one of said metadata and other information; and,
retrieving at least one color palette corresponding to the scene type to be used in recoloring the second image.

**9.** The method of Claim 8, wherein said metadata comprises at least one of image acquisition time and image acquisition location.

**10.** The method of Claim 8, comprising retrieving said other information from a web server.

**11.** An apparatus for determining color palettes of at least one image, comprising:

a means for extracting a color palette comprising a color dictionary for the at least one image based on color content in said at least one image;
means for decomposing said color palette into a dictionary matrix and an activation matrix; and
circuitry for recoloring a second image using said dictionary matrix based on a scene type of said second image corresponding to said color palette.

**12.** The apparatus of Claim 11, wherein a processor decomposes said color palette into an activation matrix.

**13.** The apparatus of Claim 12, wherein the processor extracts a color palette by projecting each pixel of the at least one image into a color dictionary.

**14.** The apparatus of Claim 13, wherein the color dictionary is the ISCC-NBS System of Color Designation.

**15.** The apparatus of Claim 12, wherein the processor decomposes said color palette by performing non-negative matrix factorization on a set of said color palettes.

**16.** The apparatus of Claim 12, wherein the activation matrix is an input to a clustering of group images according to their colors.

**17.** The apparatus of Claim 11, further comprising:

means for accessing metadata associated with the image and to estimate a scene type of the image using at least one of said metadata and other information and for retrieving at least one color palette corresponding to the scene type to be used in recoloring the image.

**18.** The apparatus of Claim 17, wherein said metadata comprises at least one of image acquisition time and image acquisition location.

**19.** The apparatus of Claim 17, wherein said other information comprises data retrieved from a web server.

**20.** The apparatus of Claim 11, comprising memory means for storing said dictionary matrix and that is accessed by said circuitry to recolor said second image.

**21.** A non-transitory processor readable medium having stored thereon instructions for causing one or more processors to collectively perform:

accessing metadata associated with the image;
estimating a scene type of the image using at least one of said metadata and other information; and
retrieving at least one color palette corresponding to the scene type to be used in recoloring the image.

Example
Images

Image To be
Edited

| Palette Extraction and Decomposition From Example Images | → | Palette Storage & Selection For Image to be Recolored | → | Colorization of Image To be Edited using Selected Palette(s) | → | Recolored Image |

110    120    130

*FIG. 1*

EP 3 021 282 A1

DICO MODE:0  DICO MODE:1  DICO MODE:2  DICO MODE:3  DICO MODE:4

*FIG. 2*

IMAGES OF CLUSTER 0

*FIG. 3*

IMAGES OF CLUSTER 1

*FIG. 4*

IMAGES OF CLUSTER 2

FIG. 5

EP 3 021 282 A1

IMAGES OF CLUSTER 3

FIG. 6

IMAGES OF CLUSTER 4

FIG. 7

800

( Start )∼801

| Extract color palettes |∼810

↓

| Decompose color palettes into dictionary and activation matrices |∼820

↓

| Recolor second image using dictionary matrix |∼830

*FIG. 8*

900

Image 1

↓

| Processor |∼910

↕

Image 2 → | Recoloring Circuitry |∼920

↓

*FIG. 9*

<u>1000</u>

( Start )⌐ 1001

Extract  Color palettes — 1010

Decompose color palettes Into
dictionary and activation matrices — 1020

Accessing Metadata — 1030

Estimating a scene type — 1040

Retrieving color palette and recolor
second image using dictionary matrix — 1050

*FIG. 10*

## 1100

Image 1

1110 — Processor

Image 2
Metadata

Other
information

Image 2 — Recoloring Circuitry

1120

Memory

1130

*FIG. 11*

## 1200

Image 1

1210 — Extraction

1220 — Decomposition

Image 2 — Recoloring Circuitry

1230

Image 2
Metadata

Other
information

Memory

1240

*FIG. 12*

Europäisches
Patentamt

European
Patent Office

Office européen
des brevets

**EUROPEAN SEARCH REPORT**

Application Number

EP 14 30 6813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/075329 A1 (SKAFF SANDRA [FR] ET AL) 29 March 2012 (2012-03-29) * abstract * * figures 1,4 * * paragraphs [0004], [0023], [0032] * | 1-20 | INV. G06T11/00 |
| A | US 2012/301023 A1 (BRAUN KAREN M [US] ET AL) 29 November 2012 (2012-11-29) * figures 1,6 * * paragraphs [0002], [0028] - [0029] * | 1-20 | |
| A | SLIM ESSID ET AL: "Smooth Nonnegative Matrix Factorization for Unsupervised Audiovisual Document Structuring", IEEE TRANSACTIONS ON MULTIMEDIA, IEEE SERVICE CENTER, PISCATAWAY, NJ, US, vol. 15, no. 2, 1 February 2013 (2013-02-01), pages 415-425, XP011487692, ISSN: 1520-9210, DOI: 10.1109/TMM.2012.2228474 * abstract * * section V.B * | 1-20 | |
| | | | TECHNICAL FIELDS SEARCHED (IPC) |
| | | | G06T G06K H04N G09G |

~~The present search report has been drawn up for all claims~~

| Place of search | Date of completion of the search | Examiner |
|---|---|---|
| Munich | 27 March 2015 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 14 30 6813

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-20

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

# LACK OF UNITY OF INVENTION
## SHEET B

Application Number

EP 14 30 6813

The Search Division considers that the present European patent application does not comply with the requirements of unity of invention and relates to several inventions or groups of inventions, namely:

```
1. claims: 1-20

      recoloring an image with a dictionary matrix
                     ---

2. claim: 21

      recoloring an image based on metadata
                     ---
```

## ANNEX TO THE EUROPEAN SEARCH REPORT
## ON EUROPEAN PATENT APPLICATION NO.

EP 14 30 6813

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2015

| Patent document cited in search report | | Publication date | Patent family member(s) | Publication date |
|---|---|---|---|---|
| US 2012075329 | A1 | 29-03-2012 | NONE | |
| US 2012301023 | A1 | 29-11-2012 | NONE | |

EPO FORM P0459

For more details about this annex : see Official Journal of the European Patent Office, No. 12/82